# EUROPÄISCHE PATENTSCHRIFT

(11) **EP 1 659 672 B1**
(45) Veröffentlichungstag und Bekanntmachung des Hinweises auf die Patenterteilung: **09.04.2008**
(21) Anmeldenummer: 05016715.4
(22) Anmeldetag: 01.08.2005
(51) Int. Cl.: H02K 3/493, H02K 15/02

(54) **Statoranordnung für eine elektrische Maschine, Verfahren zur Herstellung einer Statoranordnung und Gleichstrommotor**
Stator for an electrical machine, method for manufacturing a stator and DC motor
Stator pour machine électrique, methode pour réaliser un stator et moteur à courant continu

(30) Priorität: 22.11.2004 DE 102004056303
(43) Veröffentlichungstag der Anmeldung: 24.05.2006
(73) Patentinhaber: MINEBEA Co., Ltd., Kitasaku-gun, Nagano-ken 3849-2100 (JP)
(72) Erfinder: Hauger, Willi, 78050 Villingen-Schwenningen (DE); Ganter, Helmut, 78073 Bad Dürrheim (DE)
(74) Vertreter: Liesegang, Eva

(56) Entgegenhaltungen:
- US-A- 5 219 276
- US-A1- 2003 193 260
- US-A1- 2004 145 267
- PATENT ABSTRACTS OF JAPAN Bd. 1998, Nr. 06, 30. April 1998 (1998-04-30) -& JP 10 051987 A (HITACHI LTD), 20. Februar 1998 (1998-02-20)
- PATENT ABSTRACTS OF JAPAN Bd. 018, Nr. 137 (E-1518), 7. März 1994 (1994-03-07) -& JP 05 316677 A (MITSUBISHI ELECTRIC CORP), 26. November 1993 (1993-11-26)

## Beschreibung

Die Erfindung betrifft eine Statoranordnung für eine elektrische Maschine gemäß dem Oberbegriff von Patentanspruch 1. Eine solche Statoranordnung ist beispielsweise bekannt aus der US 2003/193260 A1; der US 2004/145267 A1; JP 10 051987 A; und JP 05 316677 A. Die Erfindung betrifft auch ein Verfahren zum Herstellen einer solchen Statoranordnung.

Die erfindungsgemäße Statoranordnung kann in unterschiedlichsten Arten elektrischer Maschinen eingesetzt werden und ist insbesondere für Gleichstrommotoren und -generatoren vorgesehen.

Ein bevorzugtes Anwendungsgebiet der Erfindung sind bürstenlose Gleichstrommotoren und andere Permanentmagnetmotoren, die vorzugsweise als Innenläufermotoren konfiguriert sind. Elektromotoren mit einer permanentmagnetischen Innenläuferkonfiguration weisen einen Rotorrückschluß auf, der auf eine Welle aufgebracht ist, wobei ein oder mehrere Permanentmagnete auf den Rotorrückschluß aufgebracht oder in diesen eingebettet sind. Ferner umfassen die Motoren eine Statoranordnung, die üblicherweise aus einer Anzahl paketierter Metallbleche aufgebaut ist, welche einen ringförmigen Statorrückschluß bilden, von dem Statorzähne radial nach innen abstehen. Die Statorzähne bilden die Statorpole, zwischen denen Statornuten zur Aufnahme von Wicklungen gebildet sind. Die Rotoranordnung ist koaxial in die Statoranordnung eingefügt. Die Erfindung ist auch anwendbar auf Außenläufermotoren.

Es ist üblich, daß Rotor und Stator in einem Gehäuse aufgenommen sind, das wenigstens einen stirnseitigen Flansch zur Befestigung des Motors aufweist. Jedoch sind auch Motoren bekannt, bei denen die Außenseite des Statorblechpakets den Motor nach außen hin abschließt. Bei den meisten Motoren besteht der Stator aus einem genuteten Blechpaket, wobei die Wicklungen, beispielsweise aus isoliertem Kupferdraht in den Nuten des Stators aufgenommen werden. Üblicherweise sind die Statorzähne an ihren freien Enden verbreitert und weisen sogenannte Polschuhe auf, die dazu dienen, soviel magnetischen Fluß wie möglich aufzunehmen und durch ihre Gestaltung das Rastmoment der Maschine zu reduzieren. Die Polschuhe haben die zusätzliche Funktion, daß sie die Wicklungen innerhalb der Nuten in ihrer Position fixieren. Zur Verminderung des Rastmomentes einer elektrischen Maschine und zur Optimierung des Magnetflusses sollten die Polschuhe so breit wie möglich sein. Ein Nachteil breiter Polschuhe ist jedoch, daß sie nur einen relativ schmalen Spalt zum Hindurchführen des Wicklungsdrahtes in die Statornuten offen lassen.

Es ist daher die Aufgabe der Erfindung, eine Statoranordnung für eine elektrische Maschine anzugeben, die bezüglich der Magnetflußfiihrung und des Rastmoments gute Eigenschaften aufweist und gleichwohl ein einfaches Bewickeln der Statorzähne erlaubt.

Diese Aufgabe wird durch eine Statoranordnung mit den Merkmalen von Patentanspruch 1 gelöst. Die Erfindung sieht auch einen Gleichstrommotor gemäß Anspruch 9 sowie ein Verfahren zur Herstellung einer Statoranordnung für eine elektrische Maschine gemäß Anspruch 10 vor.

Die Erfindung sieht eine Statoranordnung für eine elektrische Maschine und insbesondere für einen Gleichstrommotor vor, die einen Statorkörper mit einem Statorrückschlußring und mehreren Statorzähnen aufweist. Die Statorzähne erstrecken sich von dem Statorrückschlußring in radialer Richtung und grenzen zwischen sich Statornuten zur Aufnahme von Wicklungen ein. An den freien Enden der Statorzähne sind Statorpole gebildet. In ihrer bevorzugten Ausführung der Erfindung ist die Statoranordnung für einen Innenläufermotor vorgesehen, wobei die Statorzähne sich in dieser Konfiguration von dem Statorrückschlußring in radialer Richtung nach innen erstrecken. Die Statorzähne weisen an ihren freien Enden keine sich verbreiternde Polschuhe auf, wie das im Stand der Technik üblich wäre. Die Nutöffnungen zwischen den Statorzähnen sind daher weit, und das Einführen der Wickeldrähte in die Nutöffnung zum Bewickeln der Statorzähne ist deutlich einfacher als bei üblichen Statoranordnungen für Innenläufermotoren. Nach dem Bewickeln der Statorzähne wird auf die erfindungsgemäße Statoranordnung eine Hülse aufgebracht, die sich koaxial zu dem Statorkörper erstreckt und mit den freien Enden der Statorzähne gekoppelt wird. In einer Innenläuferkonfiguration bestimmt die Hülse den Innendurchmesser des Stators und schließt diesen gegenüber dem Rotor ab.

Die Hülse hat in der erfindungsgemäßen Statoranordnung mehrere Funktionen. Zunächst dient sie als Nutabdeckung und hält die Wicklungen in den Statornuten. Für diese Funktion ist es zweckmäßig, die Hülse auf ihrer den Statornuten zugewandten Oberfläche mit einem elektrisch isolierenden Material zu beschichten, so daß sie auch die Funktion einer Nutisolierung übernimmt. Eine weitere, noch wichtigere Funktion der Hülse ist die Bildung von Polschuhen. Zur Erfüllung dieser Aufgabe besteht die Hülse zweckmäßig aus einem ferromagnetischen Material, wobei sie mit den freien Enden der Statorzähne magnetisch gekoppelt ist. Ferner ist die Hülse vorzugsweise so gestaltet, daß sie zwischen jeweils zwei benachbarten Statorzähnen in axialer Richtung verlaufende nicht- oder schwachmagnetische Zonen aufweist, um die Polschuhe benachbarter Statorzähne magnetisch voneinander zu trennen. Diese Zonen zwischen den Polschuhen können schmal sein, weil sie lediglich die Funktion haben, die Polschuhe magnetisch voneinander zu trennen. Dadurch kann eine Statoranordnung mit besonders breiten Polschuhen erhalten werden, die günstig für das Laufverhalten der elektrischen Maschine ist und insbesondere eine Reduzierung des Rastmoments ermöglicht.

Gemäß der Erfindung ist die Hülse aus einem bi-permeablen Material hergestellt, das in einem ersten Zustand ferromagnetisch ist und in einem zweiten Zustand paramagnetisch ist. Dieses Material hat in seinem Ausgangszustand ferromagnetische und nach Wärmebehandlung paramagnetische Eigenschaften. Die Hülse wird in dem Bereich, in dem die nicht- oder schwachmagnetischen Zonen entstehen sollen, lokal begrenzt erhitzt und so innerhalb dieser Zonen in den paramagnetischen Zustand gebracht.

Ein Material, das sich für die Herstellung der Hülse gemäß der Erfindung eignet, ist eine Legierung auf der Basis von Fe-Cr-C, die von Hitachi Metals Ltd., Tokyo, Japan, unter der Bezeichnung YEP FA1-Stahl hergestellt wird. Diese Legierung ist beispielsweise beschrieben in den US-Patenten 6,255,005 und 6,390,443, sowie in den japanischen Offenlegungsschriften JP 2004 091842, JP 2004 143585 und JP 2004 281737. Auf diese Schriften wird in bezug auf die Zusammensetzung des bi-permeablen Materials sowie auf die darin offenbarten Temperaturbereiche, insbesondere Temperaturen zum Umwandeln des bi-permeablen Materials von dem ferromagnetischen in den paramagnetischen Zustand Bezug genommen. In den genannten Veröffentlichungen wird das bi-permeable Material in elektromagnetischen Ventilen und anderen Magnetbauteilen verwendet; eine Verwendung in Statoranordnungen ist weder beschrieben noch angedacht.

In einer vorteilhaften Ausführung der Erfindung ist die Hülse auch auf ihrer von den Statornuten abgewandten Oberfläche mit elektrisch isolierendem Material beschichtet, um eine elektrische Isolation gegenüber dem Rotor z.B. zur Vermeidung von Spannungsüberschlägen im Fehlerfall vorzusehen.

Die erfindungsgemäße Statoranordnung kann auf besonders einfache und kostengünstige Weise hergestellt werden, wenn die Hülse aus einem gestanzten, gerollten und gegebenenfalls beschichteten Blech hergestellt wird. Die Hülse wird zunächst aus einem flachen Blech gestanzt, wobei Ausnehmungen zur Verbindung mit den Statorzähnen mitausgestanzt werden. Anschließend wird das Blech zu einer Hülse gerollt, die an einer Nahtstelle offen und dadurch flexibel ist. Dies erleichtert das Aufbringen bzw. Aufdrücken der Hülse auf die freien Enden der Statorzähne. Es ist zweckmäßig, die freien Enden der Statorzähne mit einer entsprechenden Paßform zu versehen, die mit den Ausnehmungen in der Hülse zusammenwirkt. Es sind verschiedene Ausführungen der Hülse denkbar. So können die Ausnehmungen zur Verbindung mit den Statorzähnen durch sich in axialer Richtung entlang der Hülse erstreckende Schlitze gebildet sein, die an beiden axialen Enden der Hülse geschlossen sind. In dieser Ausführung werden die Ausnehmungen auf die Statorzähne gedrückt. In einer alternativen Ausführung sind die Ausnehmungen durch Schlitze gebildet, die an nur einem axialen Ende der Hülse geschlossen sind. In dieser Ausführung kann die Hülse in axialer Richtung auf den Statorkörper bzw. die Statorzähne aufgeschoben werden. In einer weiteren Ausführung der Erfindung sind in den Statorzähnen in der Nähe ihrer freien Enden seitliche Schlitze ausgebildet, um die Hülse in axialer Richtung so auf die Statorzähne aufzuschieben, daß die Kanten der Ausnehmungen in die Schlitze eingreifen. Dies hat den Vorteil, daß die Hülse nicht in Folge der magnetischen Anziehungskraft der Rotormagneten von den Statorpolen abgezogen werden kann. Zusätzlich oder alternativ kann die Hülse mit den Statorzähnen fest verbunden werden, beispielsweise durch Schweißen, insbesondere Laserschweißen, oder Kleben. Um der Hülse größere Stabilität zu verleihen, kann es zweckmäßig sein, die Naht der gerollten Hülse nach dem Aufbringen auf den Statorkörper zu schließen. Eine offene Naht hat den Vorteil, daß beim Ausstanzen der Hülse größere Toleranzen gewährt werden können und die Hülse flexibler ist.

Es ist auch eine Ausführung der Erfindung denkbar, bei der die Hülse zunächst auf die Statorzähne aufgedrückt oder aufgeschoben wird und bei der anschließend die Hülse im Bereich der die Polschuhe trennenden Schlitze aufgetrennt wird, um vollständig voneinander getrennte Polschuhe zu bilden. Zur Stabilisierung dieser oder anderer Ausführungen der erfindungsgemäßen Statoranordnung kann ferner vorgesehen sein, den bewickelten Stator mit Kunststoff zu umspritzen.

Erfindungsgemäß wird die Hülse aus einem flachen Blech gestanzt, wobei dieses Blech aus dem bi-permeablen Material der oben beschriebenen Art besteht. Ausnehmungen zur Verbindung der Hülse mit dem Statorzähnen werden mit ausgestanzt, Schlitze zur Trennung der einzelnen Pole des Stators sind jedoch nicht notwendig. Anschließend wird das Blech zu einer Hülse gerollt, die an einer Nahtstelle offen und dadurch flexibel ist. Die Hülse kann in axialer Richtung auf die Statorzähne aufgeschoben oder auf diese aufgedrückt werden. Vor oder nach dem Aufbringen der Hülse auf die Statorzähne, vorzugsweise vor dem Rollen des Bleches zu einer Hülse wird dieses innerhalb der in axialer Richtung verlaufenden Zonen, die jeweils zwischen zwei benachbarten Statorzähnen liegen, lokal erwärmt, um das bi-permeable Material innerhalb dieser begrenzten Zonen von dem ferromagnetischen Ausgangszustand in den paramagnetischen Zustand zu überführen. Zu diesem Zweck werden die Zonen vorzugsweise auf eine Temperatur > 1150° beispielsweise mittels Laser- oder Induktionsschweißen erwärmt. Während diese zweite Ausführung den zusätzlichen Arbeitsschritt der lokal begrenzten Erwärmung der Hülse erfordert, hat sie den Vorteil, daß die Hülse im Vergleich zu der geschlitzten Hülse eine bessere mechanische Stabilität aufweist. Magnetische Kurzschlüsse im Bereich des Stirnendes der Hülse, an dem bei der ersten Ausführung die Schlitze überbrückt sind, können vermieden werden.

Um die fertige Statoranordnung zu stabilisieren, kann sie mit einem Kunststoff oder Kunstharz umgossen werden. Die Hülse selbst kann ferner durch Sicken oder Abkantungen versteift werden.

Versuche mit der erfindungsgemäßen Statoranordnung in der Praxis haben gezeigt, daß die Hülse einen gewissen Anteil an Wirbelströmen erzeugt, wobei dieser Effekt in der Ausführung mit den Schlitzen geringer ist als in der Ausführung, in der die Hülse aus dem bi-permeablen Material hergestellt ist. Das Problem der Wirbelstrombildung läßt sich minimieren, indem die Hülse aus einzelnen gegeneinander elektrisch isolierten Lagen aufgebaut wird, ähnlich wie bei der Herstellung eines Statorkörpers aus einem gestanzten Blechstapel. Vorzugsweise werden zu diesem Zweck eine Reihe von Blechen aus ferromagnetischem Material oder aus dem bi-permeablen Material gestapelt und in schmalen Blechstreifen ausgestanzt. Anschließend werden die Bleche miteinander verbunden. Wenn die Bleche aus dem bi-permeablen Material hergestellt sind, bietet es sich an, die Bleche im Bereich der Zonen durch Wärmebehandlung, beispielsweise mittels Laser- oder Induktionsschweißen, in einen paramagnetischen Zustand zu überführen und gleichzeitig innerhalb dieser Bereiche miteinander zu verbinden. Anschließend werden die Ausnehmungen zum Aufschieben der Hülse auf die Statorzähne entfernt, beispielsweise ausgestanzt, und die Hülse wird rolliert und gegebenenfalls an ihren Enden miteinander verbunden. Der Vorteil dieser Anordnung ist, daß aufgrund der Blechstruktur Wirbelströme innerhalb des Hülsenmaterials praktisch vollständig vermieden werden.

In einer besonders bevorzugten Ausführung der Erfindung steht wenigstens ein axiales Ende der Hülse über ein Stirnende des Statorkörpers in axialer Richtung vor. Diese Ausführung hat den Vorteil, daß die an den axialen Stirnenden angeordneten Stege, welche die Hülse zusammenhalten und die Polschuhe überbrücken, außerhalb des Magnetfeldes des Rotors angeordnet werden können. Dadurch wird verhindert, daß die Hülse im Bereich des Rotors einen magnetischen Kurzschluß bildet. Ein weiterer Vorteil einer Hülse, die über wenigstens ein Stirnende des Statorkörpers in axialer Richtung vorsteht, ist, daß sie Stator-Magnetfelder zum Rotor hin abschirmt. Dies ist insbesondere bei solchen Maschinen sinnvoll, bei denen am Stator bzw. am Flansch der Stirnseite des Rotors gegenüberliegend ein Magnetsensor zur Erfassung der Drehlage angebracht ist. Durch die abschirmende Wirkung der axial vorstehenden Hülse werden diese Magnetsensoren nicht durch das Magnetfeld des Stators beeinflußt und können somit die Drehlage des Rotors genauer bestimmen.

Die Erfindung ist im folgenden anhand bevorzugter Ausführungen in bezug auf die Zeichnung näher erläutert. In den Figuren zeigen:
- Fig. 1: eine Außenansicht einer elektrischen Maschine gemäß der Erfindung;
- Fig. 2a: eine schematische Schnittdarstellung durch die elektrische Maschine der Fig. 1 entlang der Linie X-X die keine Ausführung der Erfindung bildet;
- Fig. 2b: eine vergrößerte Detailansicht der Fig. 2a;
- Fig. 3: eine auseinandergezogene perspektivische Darstellung der elektrischen Maschine der Fig. 2a;
- Fig. 4: eine ähnliche Darstellung wie in Fig. 3, jedoch in zusammengesetztem Zustand; und
- Fig. 5: eine auseinandergezogene perspektivische Darstellung einer Statoranordnung gemäß einer zweiten Ausführung der Erfindung;
- Fig. 6: eine Seitenansicht einer Hülse gemäß der Erfindung, die in der erfindungsgemäßen Statoranordnung eingesetzt ist;
- Fig. 7: eine perspektivische Darstellung der Hülse der Fig. 6;
- Fig. 8a: eine perspektivische Darstellung der Statoranordnung gemäß einer Abwandlung der Erfindung; und
- Fig. 8b: eine vergrößerte Detailansicht der Fig. 8a.

Die Erfindung ist im folgenden anhand des Beispiels eines bürstenlosen Gleichstrommotors beschrieben, wobei ein Fachmann jedoch verstehen wird, daß die Grundsätze der Erfindung auf unterschiedlichste Art elektrischer Maschinen, einschließlich Generatoren, anwendbar sind.

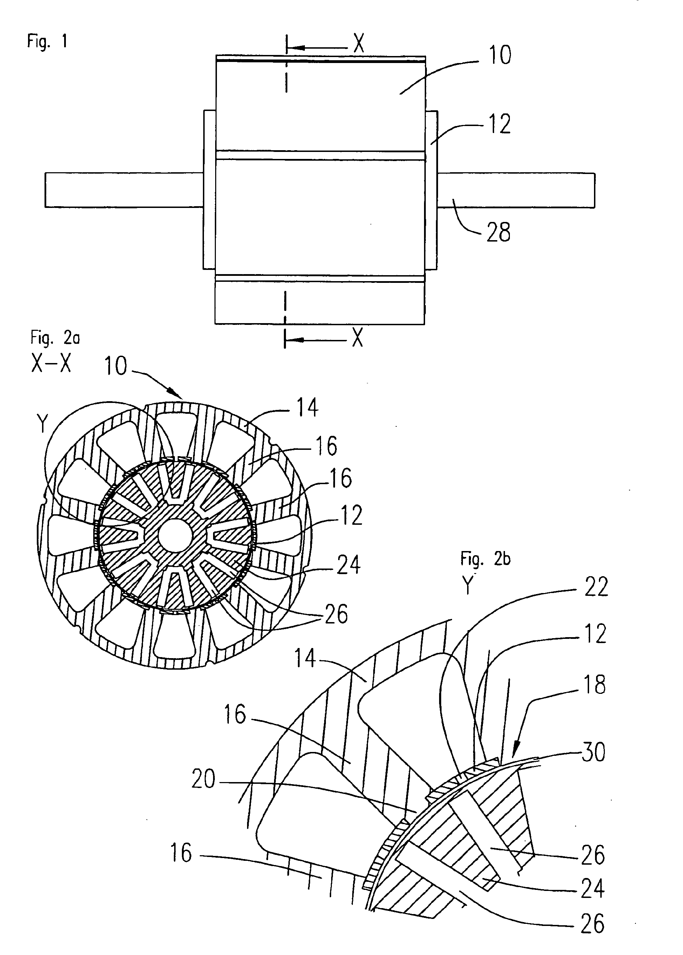

Eine Ausführung, die Grundlage der Erfindung ist, ist im folgenden mit Bezug auf die Figuren beschrieben, wobei zunächst Bezug genommen wird auf die Fig. 1 bis 4.

Fig. 1 zeigt eine Außenansicht eines Gleichstrommotors gemäß der Erfindung. In der Außenansicht der Fig. 1 ist ein Statorkörper 10 zu erkennen, in dem eine Hülse 12 auf die Statorzähne aufgebracht ist, die an beiden Stirnenden des Statorkörpers 10 axial vorsteht. Wie in den Fig. 2a, 2b, 3 und 4 dargestellt, umfaßt der Statorkörper 10 einen Statorrückschlußring 14, von dem sich Statorzähne 16 in radialer Richtung nach innen erstrecken. Die Statorzähne sind an ihren freien Enden mit der Hülse 12 gekoppelt. Die Hülse weist schlitzförmige Ausnehmungen 18 auf, die mit den freien Enden der Statorzähne 16 in Eingriff sind, wobei bei der gezeigten Ausführung die Statorzähne 16 an ihren freien Enden einen Verbindungsabschnitt 20 aufweisen, der in die Ausnehmungen 18 eingedrückt oder eingeschoben wird.

Die Hülse weist ferner Schlitze 22 auf, die etwa in der Mitte zwischen zwei benachbarten Ausnehmungen 20 bzw. zugehörigen Statorzähnen 16 angeordnet sind. Die Hülse kann durch Sicken oder Abkantungen oder ähnliches versteift sein (nicht gezeigt).

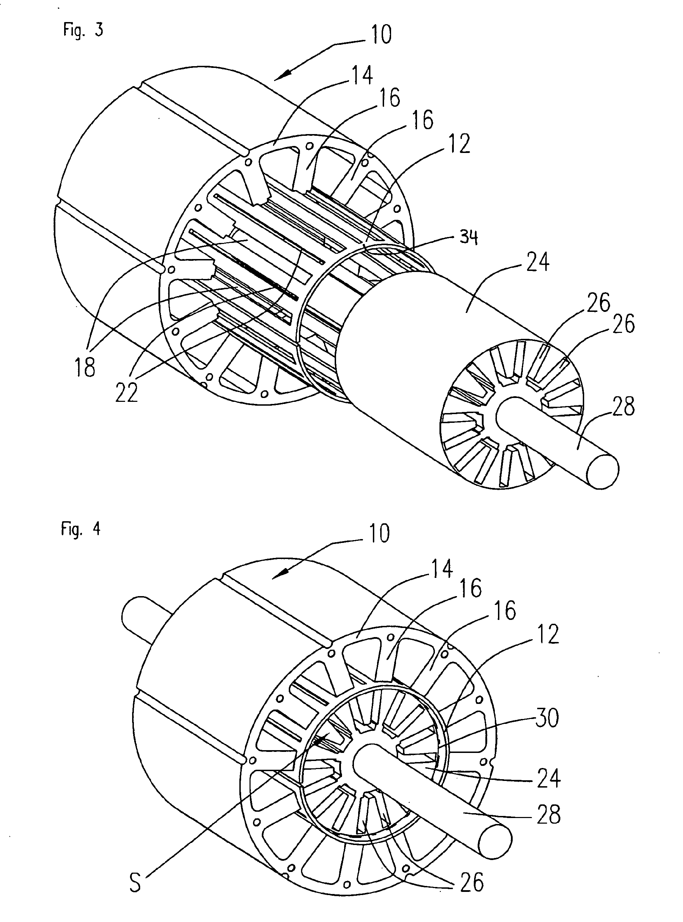

Wie insbesondere in den Fig. 1 und 4 erkennbar ist, steht die Hülse 12 im Verhältnis zu den Stirnenden des Statorkörpers 10 in axialer Richtung vor. Sie grenzt den Statorkörper 10 gegen einen Rotorraum ab.

Koaxial innerhalb des Statorkörpers 10 ist ein Rotor angeordnet, der in den Figuren schematisch durch einen Rotorkörper 24 dargestellt ist. In der gezeigten Ausführung weist der Rotorkörper 24 speichenförmig angeordnete Aussparungen 26 zur Aufnahme von Permanentmagneten auf, wobei die Aussparungen 26 jeweils paarweise verbunden sind. Der Rotorkörper 24 ist auf eine Welle 28 aufgebracht. Zwischen dem Rotorkörper 24 und dem Statorkörper 10 ist ein Arbeitsluftspalt 30 gebildet.

Wie in den Figuren dargestellt, sind die Statorzähne 16 im wesentlichen rechteckig ohne die im Stand der Technik übliche Verbreiterung an ihren freien Enden zur Bildung von Polschuhen. Dies erlaubt ein einfaches Bewickeln des Statorkörpers 10, weil die Nutöffnung zwischen zwei benachbarten Polzähnen 16 sehr weit ist. Alternativ ist es möglich, bereits vorgewickelte Spulen mitsamt Spulenkörper von innen auf die Statorzähne 16 aufzuschieben. Die Hülse 12 wird nach dem Bewickeln der Statorzähne 16 auf deren freien Enden aufgebracht und dient somit auch als Nutabdeckung. Zweckmäßig ist sie auf ihrer den Statornuten zugewandten Oberfläche mit einem elektrisch isolierenden Material beschichtet.

Die Hülse 12 ist aus einem ferroelektrischen Material hergestellt und mit den Statorzähnen magnetisch gekoppelt. In dieser Ausführung bildet die Hülse 12 die Polschuhe am Ende der Statorzähne 16, wobei jeweils benachbarte Polschuhe durch die in der Hülse ausgebildeten Schlitze 22 getrennt sind. Dadurch kann eine Statoranordnung mit Polschuhen hergestellt werden, deren Nutöffnung kleiner ist als im Stand der Technik üblich. Bei den bekannten Statoranordnungen mit angeformten Polschuhen gilt die Regel, daß die Nutöffnung etwa ≥1,5 mal der Drahtdurchmesser sein muß, welcher durch die Nutöffnung hindurchgeführt werden muß. Diese Begrenzung muß bei der erfindungsgemäßen Statoranordnung nicht eingehalten werden. Dadurch erhält man einen Stator, der im Betrieb äußerst geringe Drehmomentschwankungen und eine relativ hohe Flußkonzentration erzielt.

Die Hülse 12 wird vorzugsweise so ausgebildet, daß sie an den axialen Stirnenden des Statorkörpers 10 vorsteht. Dies hat den Vorteil, daß die axialen, die Schlitze 22 überbrückenden Stege 34, welche für den Zusammenhalt der Hülse notwendig sind, außerhalb des Wirkungsbereichs des Rotors liegen und somit keinen magnetischen Kurzschluß bilden können. Ferner schirmt die Hülse 22 am Stirnende der Statoranordnung 10 das von dem Stator erzeugte Magnetfeld in Richtung zum Rotor ab. Am Stator bzw. am Flansch sind häufig der Stirnseite des Rotors gegenüberliegende Magnetsensoren zur Erfassung der Drehlage der elektrischen Maschine angeordnet, beispielsweise Hallsensoren oder magnetoresistive Sensoren. Um ein besonders präzises Drehlagesignal zu erhalten, werden diese vorzugsweise in der Nähe des äußeren Umfangs eines Rotors angeordnet. Dies ist insbesondere auch dann der Fall, wenn der Rotor nicht, wie in der gezeigten Ausführung, eingebettete Permanentmagnete aufweist sondern die Permanentmagnete auf dem Außenumfang des Rotors angeordnet sind. In der Nähe des Umfang des Rotors wirkt jedoch auch das von dem Wickelkopf erzeugte Magnetfeld, welches bei der Erfindung durch die axiale vorstehende Hülse 12 weitgehend abgeschirmt wird. In Fig. 4 ist eine mögliche Position für ein Drehlagesensor mit dem Pfeil S bezeichnet.

Die Hülse 12 kann auf ihrer Innenseite und/oder ihrer Außenseite mit einem elektrisch isolierendem Material beschichtet sein.

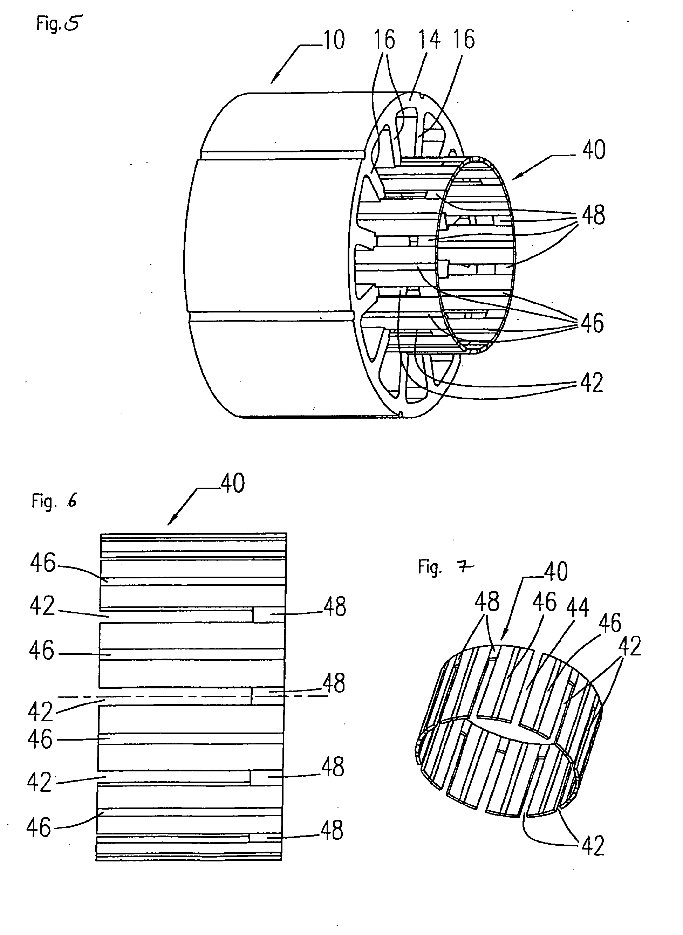

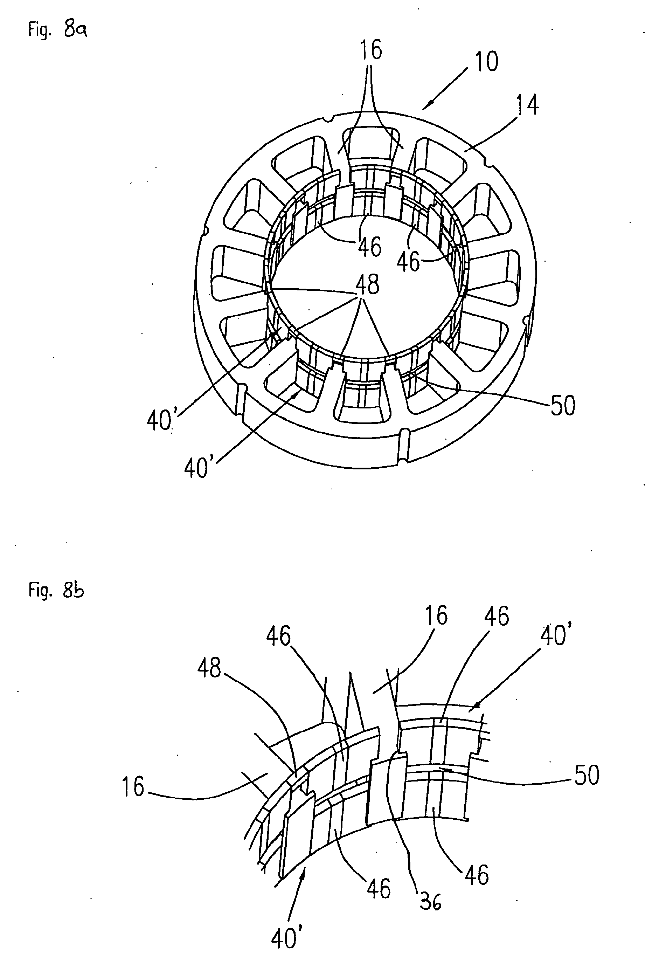

Eine Ausführung der erfindungsgemäßen Statoranordnung ist in den Fig. 5 bis 7 und eine Abwandlung dieser Ausführung in den Fig. 8a und 8b dargestellt. Soweit es den Statorkörper 10 und den Rotorkörper 24 betrifft, unterscheidet sich diese Ausführung nicht von der zuvor beschriebenen. Korrespondierende Teile sind mit denselben Bezugszeichen gekennzeichnet. Die Hülse ist jedoch anders aufgebaut als oben beschrieben.

In der Ausführung der Erfindung ist die Hülse 40 aus einem Magnetmaterial hergestellt, das in einem ersten Zustand ferromagnetisch ist und in einem zweiten Zustand paramagnetisch ist. Dieses Magnetmaterial wird auch als bi-permeables Material bezeichnet. Das bevorzugte Material für die Hülse gemäß der zweiten Ausführung ist ein YEP FA1-Stahl, der von Hitachi Metals Ltd., Tokyo, Japan, entwickelt wurde. Dies ist eine Legierung auf der Basis von Fe-Cr-C, welche zusätzlich Anteile an Si, Mn, Ni oder Al enthält. Dieses Material hat einen ferromagnetischen Ausgangszustand mit einer relativen magnetischen Permeabilität von ungefähr 900 sowie einen paramagnetischen Zustand mit einer relativen magnetischen Permeabilität von bis herab zu 1,01. Das Material kann von dem ferromagnetischen in den paramagnetischen Zustand überführt werden, indem es auf eine Temperatur erwärmt wird, die über 1050° C, insbesondere über 1100° C bevorzugt im Bereich von 1100° C und 1200° C liegt. Ein besonders bevorzugter Temperaturbereich liegt zwischen 1150° C und der Schmelztemperatur des Materials. Weitere Einzelheiten sind beschrieben beispielsweise in dem US-Patent 6,255,005 sowie in den oben genannten japanischen Offenlegungsschriften.

In der Ausführung der Erfindung wird die gesamte Hülse 40 aus diesem Material hergestellt, wobei die Hülse vorzugsweise aus einem Blech ausgestanzt wird und während des Ausstanzens Ausnehmungen 42 ausgebildet werden. Anschließend wird die Hülse rolliert, wobei sie an einer Nahtstelle 44 zunächst offen bleiben kann. Die Hülse 40 wird mit den Ausnehmungen 42 auf die Statorzähne 16 in axialer Richtung aufgeschoben, wie oben mit Bezug auf die erste Ausführung beschrieben. Alternativ kann die Hülse 40 auch auf die Statorzähne 16 aufgedrückt werden.

Die Hülse 40 wird im Bereich von sich axial erstreckenden Zonen 46 lokal erwärmt, wodurch die Hülse 40 im Bereich dieser Zonen 46 in den paramagnetischen Zustand gebracht wird. Die Zonen 46 werden so gewählt, daß sie eine vollständige magnetische Trennung der einzelnen Statorpole, welche durch die Statorzähne 16 und die angrenzenden Abschnitte der Hülse 40 gebildet werden, bewirken, wobei die Zonen 46 jeweils symmetrisch zwischen zwei benachbarten Statorpolen liegen.

Die Erwärmung kann beispielsweise mittels Laser- oder Induktionsschweißen erzeugt werden, die vorzugsweise in der Größenordnung von 1150°C liegt. Das Erwärmen der Zonen 46 der Hülse 40 kann vor oder nach dem Rollieren der Hülse erfolgen; es wird vorzugsweise vorher durchgeführt.

Wie oben erläutert, ist die Hülse vorzugsweise so ausgebildet, daß sie an den axialen Stirnenden des Statorkörpers 10 vorsteht. In der zweiten Ausführung können die Stege 48 an den Stirnenden der Hülse 40, welche die Ausnehmungen 42 überbrücken und für den Zusammenhalt der Hülse notwendig sind, ebenfalls erwärmt und dadurch in den paramagnetischen Zustand überführt werden. Auf diese Weise können magnetische Kurzschlüsse in diesem Bereich vollständig vermieden werden.

Die Hülse 40 kann auf ihrer Innenseite mit einem elektrisch isolierenden Material beschichtet sein.

In der gezeigten Ausführung sind die Ausnehmungen 42 nur an einem axialen Ende der Hülse 40 durch die Stege 48 überbrückt. In einer alternativen Ausführung könnte vorgesehen sein, daß die Ausnehmungen 42 an beiden axialen Enden der Hülse 40 überbrückt sind, um der Hülse zusätzliche Stabilität zu verleihen. In diesem Fall wäre es nicht möglich, die Hülse in axialer Richtung auf den Statorkörper 10 aufzuschieben, die Hülse könnte jedoch von innen auf die Statorzähne 16 aufgedrückt werden. Es kann zweckmäßig sein, die bewickelte Statoranordnung nach dem Aufbringen der Hülse 40 mit einem Kunststoff zu umgießen, um die Stabilität der Statoranordnung zu erhöhen.

In der Ausführung der Fig. 5 bis 7 wird die Hülse 40 von einem axialen Ende des Statorkörpers 10 her auf diesen aufgeschoben. Eine Abwandlung dieser Ausführung ist in den Fig. 8a bis 8b gezeigt, wobei in dieser Abwandlung die Hülse zweiteilig aufgebaut ist, so daß sie von den beiden gegenüberliegenden axialen Enden des Stators 10 aufgeschoben werden kann. Die beiden Hülsenhälften 40' der zweiteiligen Hülse können grundsätzlich genauso aufgebaut sein wie die in den Fig. 6 und 7 gezeigte einteilige Hülse 40, wobei die Hülse lediglich in axialer Richtung verkürzt ist, um die beiden Hälften 40' beidseits auf den Statorkörper so aufzuschieben, daß sie sich zu einer Hülse ergänzen, welche sich im wesentlichen über die gesamte axiale Länge des Stators erstreckt.

Während in den Fig. 8a und 8b ein Spalt 50 zwischen den Hülsenhälften 40' dargestellt ist, werden diese vorzugsweise soweit auf den Statorkörper 10 aufgeschoben, daß sie sich an ihren Stirnenden berühren, wobei auch ein kleiner Spalt tolerierbar ist.

Die Erfindung hat den Vorteil der erhöhten mechanischen Stabilität sowie einer vollständigen magnetischen Trennung der einzelnen Pole der Statoranordnung. Sie erzeugt jedoch in gewissem Umfang Wirbelströme, welche durch die im folgenden beschriebenen Maßnahmen unterdrückt werden können.

In einer weiteren Abwandlung der Erfindung, die in den Figuren nicht gezeigt ist, wird die Hülse aus einzelnen gegeneinander elektrisch isolierten Lagen aufgebaut. Hierzu werden vorzugsweise Bleche aus bi-permeablem Material gestapelt und zu Blechstreifen gestanzt, welche zunächst linear ausgestaltet sind und als Grundkörper für die Hülse dienen. Anschließend werden die Bereiche, welche die entmagnetisierten Zonen bilden sollen, durch Wärmebehandlung, beispielsweise mittels Laser- bzw. Induktionsschweißen, entmagnetisiert, und gleichzeitig werden die einzelnen Bleche hierdurch miteinander verbunden. Anschließend werden die Ausnehmungen zum Aufschieben der Hülse auf die Statorzähne entfernt, beispielsweise durch Stanzen, und die Hülse wird rolliert und gegebenenfalls an ihren Enden miteinander verbunden. Aufgrund der Blechstruktur der Hülse können Wirbelströme innerhalb des Hülsenmaterials vermieden werden.

Die in der vorstehenden Beschreibung, den Ansprüchen und den Zeichnungen offenbarten Merkmale können sowohl einzeln als auch in beliebige Kombination für die Verwirklichung der Erfindung in ihren verschiedenen Ausführungen von Bedeutung sein.

### Bezugszeichenliste

- 10: Statorkörper
- 12: Hülse
- 14: Statorrückschlußring
- 16: Statorzähne
- 18: Ausnehmungen
- 20: Verbindungsabschnitt
- 22: Schlitze
- 24: Rotorkörper
- 26: Aussparungen
- 28: Welle
- 30: Arbeitsluftspalt
- 34: Stege
- 36: Nuten
- 40: Hülse
- 40': Hülsenhälften
- 42: Ausnehmungen
- 44: Nahtstelle
- 46: paramagnetische Zonen
- 48: Stege
- 50: Spalt
- S: Sensorposition

## Patentansprüche

1. Statoranordnung für eine elektrische Maschine, insbesondere einen Gleichstrommotor, umfassend einen Statorkörper (10) mit einem Statorrückschlußring (14) und einer Anzahl Statorzähne (16), zwischen denen Statornuten zur Aufnahme von Wicklungen gebildet sind, wobei die Statorzähne (16) sich von dem Statorrückschlußring (14) in radialer Richtung erstrecken und an den freien Enden der Statorzähne (16) Statorpole gebildet sind, wobei die Statorzähne (16) an ihren freien Enden mit einer Hülse (12) gekoppelt sind, die sich koaxial zu dem Statorkörper (10) erstreckt, und die Hülse (12) zwischen jeweils zwei benachbarten Statorzähnen (16) in axialer Richtung verlaufende nicht oder schwach magnetische Zonen aufweist, **dadurch gekennzeichnet, daß** die Hülse aus einem bi-permeablen Material hergestellt ist, dessen Ausgangszustand ferromagnetisch ist, und die nicht bzw. schwachen magnetischen Zonen durch lokales Erwärmen dieses Materials gebildet sind.

2. Statoranordnung nach Anspruch 1, **dadurch gekennzeichnet, daß** die Hülse Polschuhe an den freien Enden der Statorzähne (16) bildet.

3. Statoranordnung nach einem der vorangehenden Ansprüche, **dadurch gekennzeichnet, daß** die Hülse (12) auf ihrer den Statornuten zugewandten Oberfläche und/oder auf ihrer von den Statornuten abgewandten Oberfläche mit einem elektrisch isolierenden Material beschichtet ist.

4. Statoranordnung nach einem der vorangehenden Ansprüche, **dadurch gekennzeichnet, daß** die Hülse (12) aus einem gestanzten, gerollten Blech hergestellt ist.

5. Statoranordnung nach einem der vorangehenden Ansprüche, **dadurch gekennzeichnet, daß** in der Hülse (12) Ausnehmungen (18) zur Verbindung mit den Statorzähnen (16) ausgebildet sind.

6. Statoranordnung nach Anspruch 5, **dadurch gekennzeichnet, daß** in den Statorzähnen (16) seitliche Nuten (36) ausgebildet sind, in denen die Hülse (12) gehalten ist.

7. Statoranordnung nach Anspruch 5 oder 6, **dadurch gekennzeichnet, daß** die Ausnehmungen (18) an einem Stirnende der Hülse (12) offen sind, um die Hülse in axialer Richtung auf die Statorzähne (16) aufzuschieben.

8. Statoranordnung nach einem der vorangehenden Ansprüche, **dadurch gekennzeichnet, daß** wenigstens ein axiales Ende der Hülse (12) über ein Stirnende des Statorkörpers (10) in axialer Richtung vorsteht.

9. Gleichstrommotor mit einer Statoranordnung nach Anspruch 8, **dadurch gekennzeichnet, daß** ein Rotor (24) koaxial in den Statorkörper (10) eingefügt ist und ein Drehlagesensor einer Stirnseite des Rotors (24) radial innerhalb der axial vorstehenden Hülse (12) gegenüberliegend angeordnet ist.

10. Verfahren zur Herstellung einer Statoranordnung für eine elektrische Maschine, insbesondere einen Gleichstrommotor, mit den Verfahrensschritten:
Bereitstellen eines Statorkörpers (10) mit einem Statorrückschlußring (14) und einer Anzahl Statorzähne (16), zwischen denen Statornuten zur Aufnahme von Wicklungen gebildet sind, wobei die Statorzähne (16) sich von dem Statorrückschlußring (14) in radialer Richtung erstrecken und an den freien Enden der Statorzähne (16) Statorpole gebildet sind,
Versehen des Statorkörpers (10) mit Phasenwicklungen und
Verbinden der Statorzähne (16) an ihren freien Enden mit einer Hülse (12), die sich koaxial zu dem Statorkörper (10) erstreckt, **dadurch gekennzeichnet, daß** die Hülse aus einer bi-permeablen Materiallegierung hergestellt wird, die in einem Ausgangszustand ferromagnetisch ist, und daß die Hülse vor oder nach der Verbindung mit den Statorzähnen innerhalb von in axialer Richtung verlaufenden Zonen zwischen jeweils zwei benachbarten Statorzähnen lokal erwärmt wird, um das bi-permeable Material innerhalb dieser Zonen in einen paramagnetischen Zustand zu überführen.

11. Verfahren nach Anspruch 10, **dadurch gekennzeichnet, daß** die Hülse (12) nach dem Aufbringen auf die Statorzähne (16) in einzelne Polschuhe aufgetrennt wird.

12. Verfahren nach einem der Ansprüche 10 bis 11, **dadurch gekennzeichnet, daß** die Statoranordnung nach dem Aufbringen der Hülse (12) mit einem Kunststoff oder einem Kunstharz umgossen wird.

13. Verfahren nach einem der Ansprüche 10 bis 12, **dadurch gekennzeichnet, daß** die Hülse in axialer Richtung auf die Statorzähne aufgeschoben wird.

## Claims

1. A stator arrangement for an electrical machine, in particular a DC motor, comprising a stator body (10) with a stator yoke ring (14) and a number of stator teeth (16), between which stator notches are formed for the accommodation of windings, wherein
the stator teeth (16) extend from the stator yoke ring (14) in the radial direction, and stator poles are formed at the distal ends of the stator teeth (16), wherein
the stator teeth (16) at their distal ends are coupled with a sleeve (12), which extends coaxially with the stator body (10), and the sleeve (12) has non-magnetic or weakly magnetic zones running in the axial direction between each pair of adjacent stator teeth (16),
**characterised in that** the sleeve is manufactured from a bi-permeable material, whose initial state is ferromagnetic, and **in that** the non-magnetic or weakly magnetic zones are formed by local heating of this material.

2. The stator arrangement according to Claim 1,
**characterised in that** the sleeve forms pole shoes at the distal ends of the stator teeth (16).

3. The stator arrangement according to one of the previous claims,
**characterised in that** the sleeve (12), on its surface facing towards the stator notches and/or on its surface facing away from the stator notches, is coated with an electrically insulating material.

4. The stator arrangement according to one of the previous claims,
**characterised in that** the sleeve (12) is manufactured from a stamped, rolled sheet.

5. The stator arrangement according to one of the previous claims,
**characterised in that** recesses (18) are designed into the sleeve (12) for connection with the stator teeth (16).

6. The stator arrangement according to Claim 5,
**characterised in that** lateral grooves (36) are designed into the stator teeth (16), in which grooves the sleeve (12) is held.

7. The stator arrangement according to Claim 5 or 6,
**characterised in that** the recesses (18) are open at an end face of the sleeve (12) in order to push the sleeve onto the stator teeth (16) in the axial direction.

8. The stator arrangement according to one of the previous claims,
**characterised in that** at least one axial end of the sleeve (12) projects beyond an end face of the stator body (10) in the axial direction.

9. A DC motor with a stator arrangement according to Claim 8,
**characterised in that** a rotor (24) is introduced coaxially into the stator body (10), and
**in that** a rotary position sensor is arranged radially within the axially projecting sleeve (12) opposite to a front face of the rotor (24).

10. A method for the manufacture of a stator arrangement for an electrical machine, in particular a DC motor, with the method steps:
providing a stator body (10) having a stator yoke ring (14) and a number of stator teeth (16), between which stator notches are formed for the accommodation of windings, wherein
the stator teeth (16) extend from the stator yoke ring (14) in the radial direction, and stator poles are formed at the distal ends of the stator teeth (16),
providing of the stator body (10) with phase windings, and
connecting of the stator teeth (16) at their distal ends with a sleeve (12), which extends coaxially with the stator body (10),
**characterised in that** the sleeve is manufactured from a bi-permeable alloy material, which in its initial state is ferromagnetic, and
**in that** the sleeve before or after connection with the stator teeth, within zones running in the axial direction between each pair of adjacent stator teeth, is locally heated in order to transfer the bi-permeable material within these zones into a paramagnetic state.

11. The method according to Claim 10,
**characterised in that** after application of the sleeve (12) onto the stator teeth (16) the former is divided into individual pole shoes.

12. The method according to one of the Claims 10 to 11,
**characterised in that** after the application of the sleeve (12) the stator arrangement is cast in a plastic or resin.

13. The method according to one of the Claims 10 to 12,
**characterised in that** the sleeve is slid onto the stator teeth in the axial direction.

## Revendications

1. Stator pour une machine électrique, en particulier un moteur à courant continu, comprenant un corps de stator (10) avec une bague de reflux de stator (14) et une pluralité de dents de stator (16), entre lesquelles sont formées de rainures de stator pour héberger des enroulements, les dents de stator (16) s'étendent en direction radiale depuis la bague de reflux de stator (14) et, sur les extrémités libres de dents de stator (16), sont formés des pôles de stator, les dents de stator (16) étant couplées, à leurs extrémités libres, à une douille (12) qui s'étend coaxialement au corps de stator (10), et la douille (12) présentant, entre chaque fois deux dents de stator (16) voisines, des zones non magnétiques ou faiblement magnétiques, s'étendant en direction axiale, **caractérisé en ce que** la douille est formée d'un matériau bi-perméable, dont l'état initial est ferromagnétique, et les zones non magnétiques ou faiblement magnétiques sont formées par un chauffage local de ce matériau.

2. Stator selon la revendication 1, **caractérisé en ce que** la douille forme des épanouissements ou masses polaires aux extrémités libres des dents de stator (16).

3. Stator selon l'une des revendications précédentes, **caractérisé en ce que** la douille (12) est revêtue, sur sa surface tournée vers les rainures de stator et/ou sur sa surface opposée aux rainures de stator, d'un matériau isolant électriquement.

4. Stator selon l'une des revendications précédentes, **caractérisé en ce que** la douille (12) est fabriquée en une tôle laminée, estampée.

5. Stator selon l'une des revendications précédentes, **caractérisé en ce que** des évidements (18), pour assurer la liaison aux dents de stator (16), sont réalisés dans la douille (12).

6. Stator selon la revendication 5, **caractérisé en ce que** dans les dents de stator (16) sont réalisées des rainures (36) dans lesquelles la douille (12) est maintenue.

7. Stator selon la revendication 5 ou 6, **caractérisé en ce que** les évidements (18) sont ouverts à une extrémité frontale de la douille (12), pour enfiler la douille en direction axiale sur les dents de stator (16).

8. Stator selon l'une des revendications précédentes, **caractérisé en ce qu'**au moins une extrémité axiale de la douille (12) fait saillie en direction axiale, sur une extrémité frontale du corps de stator (10).

9. Moteur à courant continu équipé d'un stator selon la revendication 8, **caractérisé en ce qu'**un rotor (24) est inséré coaxialement dans le corps de stator (10), et un capteur de palier de rotation est disposé en regard d'une face frontale du rotor (24), radialement à l'intérieur de la douille (12) en saillie axialement.

10. Procédé de fabrication d'un stator pour une machine électrique, en particulier un moteur à courant continu, avec les étapes de procédé suivantes :
fourniture d'un corps de stator (10) avec une bague de reflux de stator (14) et une pluralité de dents de stator (16), entre lesquelles des rainures de stator sont formées pour héberger des enroulements, les dents de stator (16) s'étendant en direction radiale depuis la bague de reflux de stator (14) et des pôles de stator étant formées sur les extrémités libres des dents de stator (16),
équipement du corps de stator (10) avec des enroulements de phase, et
liaison des dents de stator (16), à leurs extrémités libres, à une douille (12) s'étendant coaxialement par rapport au corps de stator (10), **caractérisé en ce que** la douille (12) est fabriquée à partir d'un alliage de matériau bi-perméable, qui, à un état initial, est ferromagnétique, et **en ce que** la douille, avant ou après la liaison aux dents de stator, est chauffée localement à l'intérieur de zones s'étendant en direction axiale, entre chaque fois deux dents de stator voisines, pour faire passer le matériau bi-perméable à l'intérieur de ces zones en un état paramagnétique.

11. Procédé selon la revendication 10, **caractérisé en ce que** la douille (12) est décomposée en masses ou épanouissements polaires individuels, après montage sur les dents de stator (16).

12. Procédé selon l'une des revendications 10 à 11, **caractérisé en ce que** le stator, après montage de la douille (12), est enrobé par moulage, avec une matière synthétique ou une résine synthétique.

13. Procédé selon l'une des revendications 10 à 12, **caractérisé en ce que** la douille est enfilée en direction axiale sur les dents de stator.
